# EUROPÄISCHE PATENTSCHRIFT

(11) **EP 2 960 108 B1**
(45) Veröffentlichungstag und Bekanntmachung des Hinweises auf die Patenterteilung: **16.10.2019**
(21) Anmeldenummer: 15173420.9
(22) Anmeldetag: 23.06.2015
(51) Int. Cl.: B60N 2/58, B60N 2/70

(54) **SITZBEZUG, FAHRZEUGSITZ DAMIT UND VERFAHREN ZU DEREN HERSTELLUNG**
SEAT COVER, VEHICLE SEAT COMPRISING SAME AND METHOD FOR THEIR PREPARATION
HOUSSE DE SIÈGE, SIÈGE DE VÉHICULE EN ÉTANT ÉQUIPÉ ET SON PROCÉDÉ DE FABRICATION

(30) Priorität: 23.06.2014 DE 102014008960; 03.11.2014 DE 102014016088
(43) Veröffentlichungstag der Anmeldung: 30.12.2015
(73) Patentinhaber: Adient Luxembourg Holding S.à r.l., 1855 Luxembourg (LU)
(72) Erfinder: Mondelaers, Niels, 2430 Laakdal (BE); Xiromeritis, Nick, Köln Köln (DE); Dr. Erdmenger, Tina, 6043 HW Roermond (NL); Kohlen, Nikola, 50931 Köln (DE); Schulze, Uwe, 51149 Köln (DE)
(74) Vertreter: Jabbusch, Matthias

(56) Entgegenhaltungen:
- DE-A1-102009 006 985
- FR-A1- 2 841 840

## Beschreibung

Die Erfindung betrifft einen Sitzbezug mit einem mehrere Schichten aufweisenden Verbund sowie ein Verfahren zu dessen Herstellung. Die Schichten des Verbundes umfassen zumindest eine auf der Sichtseite des Sitzbezuges angeordnete Dekorschicht. Als Dekorschicht wird beispielsweise Leder verwendet. Der Sitzbezug ist mittels des Verbundes dreidimensional vorgeformt. Ein derartiger Sitzbezug ist aus DE 10 2009 006 985 A1 bekannt. Es ist weiter bekannt, ein Polster eines herzustellenden Fahrzeugsitzes mit einem derartigen Sitzbezug zu beziehen.

Der aus DE 10 2009 006 985 A1 bekannte Sitzbezug weist hinter der Dekorschicht im Verbund eine Kaschierung, dahinter eine Folie und dahinter eine Stoffschicht auf. Der Verbund ist thermoplastisch verformt und weist eine formstabile Kontur auf.

Aus FR 2 841 840 ist ein Kraftfahrzeugpolsterelement bekannt, welches aus einem Verbund gebildet ist, welcher eine Schicht aus einem dreidimensionalen Material aufweist. Diese Schicht ist an ihrer Rückseite mit einer Komfortschicht aus synthetischem Schaummaterial, beispielsweise Polyurethan, verbunden. Die Verbindung zwischen der Schicht aus dreidimensionalem Material und der Komfortschicht ist durch Nähte oder mittels Kleben oder Schweißen hergestellt.

Der Erfindung liegt ausgehend von DE 10 2009 006 985 A1 die Aufgabe zugrunde eine formstabile Kontur eines Sitzbezuges mit einem Verbund zu erhalten, der eine textile Rückseite aufweist und mit geringem Aufwand hergestellt werden kann.

Die Erfindung löst diese Aufgabe mit einem Sitzbezug nach Patentanspruch 1, mit einem Fahrzeugsitz nach Patentanspruch 6, der den Sitzbezug aufweist, mit einem Verfahren zum Herstellen eines Sitzbezuges nach Patentanspruch 7 und mit einem Verfahren zum Herstellen des Fahrzeugsitzes nach Patentanspruch 14. Vorteilhafte Ausführungsformen der Erfindung sind in den Unteransprüchen angegeben.

Bei einem Sitzbezug mit einem mehrere Schichten aufweisenden Verbund, wobei der Sitzbezug mittels des Verbundes dreidimensional vorgeformt ist und wobei die Schichten des Verbundes zumindest eine auf der Sichtseite des Sitzbezuges angeordnete Dekorschicht umfassen, ist erfindungsgemäß vorgesehen, dass die Schichten des Verbundes ein Abstandstextil umfassen, welches auf seiner der Sichtseite des Sitzbezuges zugeordneten Seite mit der Dekorschicht verbunden ist, dass die Schichten des Verbundes eine textile Stützschicht, insbesondere aus Vlies, umfassen, die auf der Abseite des Sitzbezuges angeordnet ist, und dass das Abstandstextil auf seiner der Abseite des Sitzbezuges zugeordneten Seite mittels Fasern, die an wenigstens einer Oberfläche wenigstens einer der der beiden Schichten von Abstandstextil und Stützschicht angeordnet sind und beim Herstellen des Verbundes erhitzt wurden, mit der Stützschicht verbunden ist.

Entsprechend ist bei einem Verfahren zum Herstellen eines Sitzbezuges mit einer auf der Sichtseite des Sitzbezuges angeordneten Dekorschicht, wobei ein Verbund mit mehreren Schichten, welche zumindest die Dekorschicht umfassen, hergestellt wird und der Sitzbezug mittels des Verbundes dreidimensional vorgeformt wird, erfindungsgemäß vorgesehen, dass die Schichten des herzustellenden Verbundes ein Abstandstextil umfassen, welches auf seiner der Sichtseite des herzustellenden Sitzbezuges zugewandten Seite mit der Dekorschicht verbunden wird, wobei der Verbund mit einer textilen Stützschicht, insbesondere aus Vlies, hergestellt wird, die auf der Abseite des Sitzbezuges angeordnet wird, wobei Schichten des herzustellenden Verbundes durch Erhitzen von Fasern von wenigstens einer Oberfläche wenigstens einer er beiden Schichten von Abstandstextil und Stützschicht miteinander verbunden werden und wobei mittels diesen Fasern das Abstandstextil auf seiner der Abseite des Sitzbezuges zugeordneten Seite mit der Stützschicht verbunden wird.

Dank des Abstandstextils, welches mit der Dekorschicht verbunden ist, weist der Sitzbezug auch ohne die aus DE 10 2009 006 985 A1 bekannten weiteren Schichten, insbesondere auch ohne eine Folie, eine formstabile Kontur auf. Der dreidimensional vorgeformte Sitzbezug hält insbesondere selbsttätig in seiner dreidimensionalen Form.

Der Verbund wird mit einer Stützschicht hergestellt, die auf der Abseite des Sitzbezuges angeordnet wird. Insbesondere besteht der Verbund aus der Dekorschicht, dem Abstandstextil und der Stützschicht. Das Abstandstextil wird auf seiner der Abseite des Sitzbezuges zugeordneten Seite mit der Stützschicht verbunden. Dabei ist unter der Abseite des Sitzbezuges die der Sichtseite des Sitzbezuges gegenüberliegende Flächenseite oder in anderen Worten die dem Sitzinsassen abgewandte Flächenseite des Sitzbezuges zu verstehen. Die Stützschicht ist eine textile Stützschicht, vorzugsweise aus Vlies. Dadurch kann der dreidimensional vorgeformte Verbund zusätzlich gestützt werden.

Schichten des herzustellenden Verbundes werden durch Erhitzen von Fasern von wenigstens einer Oberfläche wenigstens einer dieser Schichten miteinander verbunden. Insbesondere weist die Stützschicht an ihrer Oberfläche entsprechende Fasern auf, so dass eine Verbindung mit dem Abstandstextil ohne Zugabe von Klebstoffen oder Haftvermittlern hergestellt werden kann. Alternativ oder zusätzlich ist das Abstandstextil an wenigstens einer seiner Oberflächen mit entsprechenden Fasern oder Garnen ausgebildet, um eine Verbindung zur Dekorschicht und/oder zur Stützschicht ohne Zugabe von Klebstoffen oder Haftvermittlern herzustellen.

Das Abstandstextil ist vorzugweise ein Abstandsgestrick oder ein Abstandsgewirke oder ein Abstandsgewebe. In jedem Fall sind zwei Schichten des Abstandstextils, insbesondere mittels Polfäden, voneinander beabstandet gehalten. Dadurch ist zudem eine gute Belüftung des Sitzbezuges sichergestellt. Die Dekorschicht ist beispielsweise Leder oder Kunstleder oder ein Textil. Das Kunstleder besteht beispielsweise aus Polyvinylchlorid (PVC) oder Polyurethan (PUR) oder aus einem mit PVC, insbesondere Weich-PVC, oder PUR beschichteten Textil.

Vorzugsweise ist oder wird der Sitzbezug auf seiner Sichtseite zumindest bereichsweise konkav oder konvex vorgeformt. Dadurch ist es möglich, auf einfache Weise das Polster eines Fahrzeugsitzes, welches eine entsprechend konkav oder konvex geformte Oberfläche aufweist, mit dem erfindungsgemäßen Sitzbezug zu beziehen. Zum Herstellen des Verbundes werden die Schichten zwischen Formteilen, insbesondere in Form von Formhälften, angeordnet und darin, insbesondere mittels Druck und Hitze, zu dem Verbund verbunden.

Vorzugsweise weist der Verbund wenigstens ein Verbindungsmaterial auf. Der Verbund wird dabei mittels Erhitzen und Aushärten des Verbindungsmaterials hergestellt, so dass nachfolgend wenigstens zwei der Schichten des Verbundes durch das ausgehärtete Verbindungsmaterial zusammengehalten werden. Das Verbindungsmaterial ist beispielsweise ein Klebstoff oder ein Haftvermittler.

Das Verbindungsmaterial wird vor dem Erhitzen, insbesondere netzförmig, zwischen wenigstens zwei der mittels des Verbindungsmaterials zusammenzuhaltenden Schichten des herzustellenden Verbundes angeordnet. Beispielsweise wird das Verbindungsmaterial zwischen der Dekorschicht und dem Abstandstextil angeordnet. Das Abstandstextil kann auf entsprechende Weise mit der gegebenenfalls vorhandenen Stützschicht verbunden werden.

Das Erhitzen der entsprechend ausgebildeten Fasern sowie das Erhitzen des Verbindungsmaterials erfolgt vorzugsweise mittels eines Hochfrequenzfeldes, insbesondere nachdem die Schichten des herzustellenden Verbundes zwischen den Formteilen angeordnet wurden. Die Formteile sind dabei vorzugsweise derart ausgebildet, dass sich das Hochfrequenzfeld durch diese Formteile hindurch erstrecken kann. Während des Erhitzens pressen die Formteile den Sitzbezug in seine vorgesehene Form, so dass der Sitzbezug nachfolgend dreidimensional vorgeformt ist. Alternativ oder zusätzlich werden die Schichten des herzustellenden Verbundes mittels Kantenschweißen miteinander verbunden. Vorzugsweise werden zusätzlich lokale Verprägungen, insbesondere Verschweißungen, in der Fläche zwischen den Kanten des Sitzbezuges eingebracht, um die Größen unverbundener Abschnitte klein zu halten.

Die Dekorschicht kann Perforationen aufweisen, insbesondere wenn das Material der Dekorschicht luftundurchlässig, nämlich beispielsweise Leder oder Kunstleder ist. Insbesondere zusammen mit dem netzartig aufgebrachten Verbindungsmaterial wird durch die Perforationen somit eine Belüftung des Abstandstextils zur Sichtseite des Sitzbezuges ermöglicht. Die Dekorschicht wird hierfür bevorzugt vor dem Verbinden der Schichten perforiert.

Der erfindungsgemäße Fahrzeugsitz kann konstruktiv auf herkömmliche Weise ausgebildet sein. Insbesondere weist ein herkömmlicher Fahrzeugsitz ein Gestänge oder eine Schale auf. Ferner ist ein Polster, insbesondere Schaumpolster, vorgesehen. Das Polster besteht vorzugsweise aus Polyurethan und wird oder ist erfindungsgemäß mit dem erfindungsgemäßen Sitzbezug oder mit einem auf erfindungsgemäße Weise hergestellten Sitzbezug bespannt.

Weitere Ausführungsformen ergeben sich aus der Zeichnung. In der Zeichnung ist ein erfindungsgemäßes Ausführungsbeispiel der Erfindung in zwei Figuren dargestellt. In der Zeichnung zeigt
- Fig. 1:: einen erfindungsgemäßen Sitzbezug, der zwischen zwei Formteilen angeordnet ist und dort dreidimensional vorgeformt wird, in einer Seitenschnittdarstellung;
- Fig. 2:: einen Ausschnitt des Sitzbezuges gemäß Fig. 1 in vergrößerter, perspektivischer Darstellung mit Teilschnitten zur Veranschaulichung des Schichtaufbaus, und
- Fig. 3:: zwei weitere Formteile zur Herstellung eines erfindungsgemäßen Sitzbezuges in perspektivischer Ansicht.

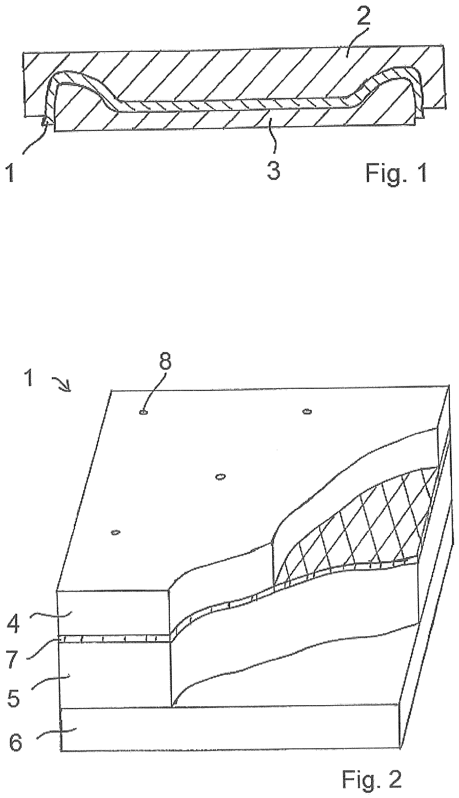

In Fig. 1 ist mit dem Bezugszeichen 1 ein erfindungsgemäßer Sitzbezug bezeichnet, der zwischen einem oberen Formteil 2 und einem unteren Formteil 3 angeordnet ist, um dort durch Verbinden von mehreren Schichten zu einem Verbund dreidimensional vorgeformt zu werden.

Der Sitzbezug 1 ist im gezeigten Ausführungsbeispiel mit dem Verbund identisch, kann jedoch alternativ auch noch weitere Schichten oder Teile aufweisen, die nicht zu dem Verbund gehören und erst nach der Formgebung dem Verbund hinzugefügt werden. Der Verbund umfasst gemäß Fig. 2 eine Dekorschicht 4, beispielsweise ein Bezugsleder. Weiter umfasst der Verbund ein Abstandstextil 5, welches beispielsweise als Abstandsgestrick ausgebildet ist. Unter dem Abstandstextil 5 ist eine Stützschicht 6 angeordnet.

Die Dekorschicht 4 und das Abstandstextil 5 sind mittels eines Verbindungsmaterials 7 miteinander verbundene Schichten des Verbundes. Das Verbindungsmaterial 7, beispielsweise ein Klebstoff oder Haftvermittler, hat die Eigenschaft, sich in einem Hochfrequenzfeld erhitzen zu lassen, dabei zu schmelzen und beim Aushärten eine feste Verbindung zwischen der Dekorschicht 4 und dem Abstandstextil 5 herzustellen. Das Verbindungsmaterial 7 ist netzartig zwischen den Schichten 4 und 5 angeordnet, um das Durchtreten von Luft und damit eine Belüftung des Abstandstextils 5 durch Perforationen, von denen nur eine Perforation beispielhaft mit dem Bezugszeichen 8 bezeichnet ist, zur Sichtseite des Sitzbezuges 1 zu ermöglichen.

Die Stützschicht 6 ist eine als Vlies ausgebildete Schicht des Verbundes, welche zumindest an ihrer der Sichtseite des Sitzbezuges 1 zugewandten Seite speziell ausgebildete Fasern aufweist, welche sich ähnlich wie das Verbindungsmaterial 7 in einem Hochfrequenzfeld verhalten. Insbesondere schmelzen die Fasern, verbinden sich dabei mit dem Abstandstextil 3 und sorgen nach dem Aushärten somit für die Verbindung zwischen dem Abstandstextil 5 und der Stützschicht 6.

In einem zum Ausführungsbeispiel gemäß Fig. 2 alternativen Ausführungsbeispiel ist auch zwischen dem Abstandstextil 5 und der Stützschicht 6 ein Verbindungsmaterial vorgesehen, welches vorzugsweise wie das Verbindungsmaterial 7 zwischen der Dekorschicht 4 und dem Abstandstextil 5 ausgebildet ist. Optional kann gemäß diesem Ausführungsbeispiel ferner eine Stützschicht, welche im Gegensatz zur Stützschicht 6 nicht die speziell ausgebildeten Fasern aufweist, jedoch ansonsten vorzugsweise entsprechend der Stützschicht 6 ausgebildet ist, anstelle der Stützschicht 6 vorgesehen sein. Die speziell ausgebildeten Fasern verhalten sich dabei in einem Hochfrequenzfeld ähnlich wie das Verbindungsmaterial 7.

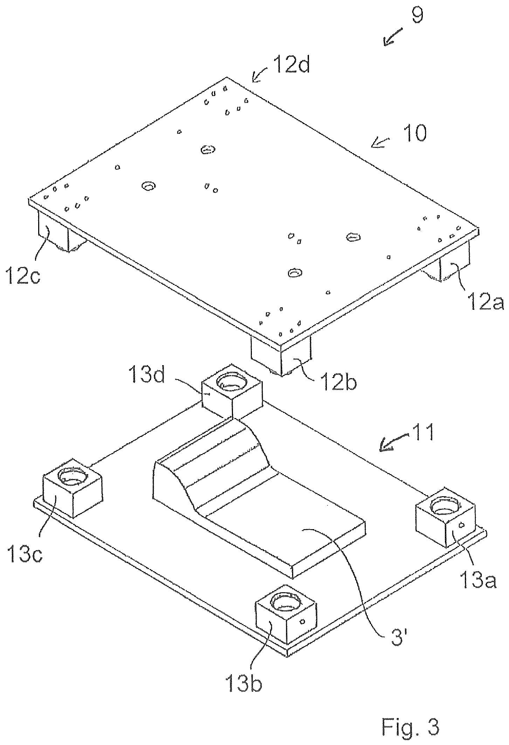

Fig. 3 zeigt ein Werkzeug 9 mit einer oberen Werkzeughälfte 10 und einer unteren Werkzeughälfte 11. Das Werkzeug 9 ist zur Herstellung eines erfindungsgemäßen Sitzbezuges, insbesondere auch des Sitzbezuges 1 von Fig. 1, ausgebildet. Hierfür weist die obere Werkzeughälfte 10 ein in der Zeichnung verdeckt angeordnetes und daher nicht sichtbares, zum oberen Formteil 2 alternatives, oberes Formteil auf und weist die untere Werkzeughälfte 11 ein zum Formteil 3 alternatives, unteres Formteil 3' auf. Zwischen dem oberen Formteil und dem unteren Formteil 3' kann der Sitzbezug in einem Hochfrequenzfeld vorgeformt werden, wobei die hier beabstandet voneinander dargestellten Werkzeughälften 10 und 11 den Sitzbezug in Form drücken. Dabei werden jedoch die Werkzeughälften 10 und 11 durch obere Abstandshalter 12a, 12b, 12c und 12d sowie durch untere Abstandshalter 13a, 13b, 13c und 13d auf einen Mindestabstand gehalten. In einem Bereich oberhalb dieses Mindestabstandes bis zu diesem Mindestabstand sind die Werkzeughälften 10 und 11 lediglich vertikal verschiebbar mittels der Abstandshalter 12a, 12b, 12c, 12d, 13a, 13b, 13c und 13d geführt. Hierzu greifen Abschnitte der oberen Abstandshalter 12a, 12b, 12c und 12d in korrespondierende Aussparungen der unteren Abstandshalter 13a, 13b, 13c und 13d ein.

Zur Isolierung der Werkzeughälften 10 und 11 gegeneinander sind die Werkzeughälften 10 und 11 zumindest teileweise an ihrer Oberfläche mit einer isolierenden Beschichtung versehen. Zumindest das obere Formteil und das untere Formteil 3' weisen die Beschichtung auf. Vorzugsweise besteht die insolierende Beschichtung aus Gummi oder weist Gummi auf. Diese Beschichtung ist zudem elastisch und verhindert daher ein Zerquetschen der Ledernarbung in vorgeformten Bereichen eines eine Schicht aus Leder aufweisenden Sitzbezuges, der mittels des Werkzeuges 9 vorgeformt wird.

### Bezugszahlenliste

- 1: Sitzbezug
- 2: oberes Formteil
- 3: unteres Formteil
- 3': unteres Formteil
- 4: Dekorschicht
- 5: Abstandstextil
- 6: Stützschicht
- 7: Verbindungsmaterial
- 8: Perforation
- 9: Werkzeug
- 10: obere Werkzeughälfte
- 11: untere Werkzeughälfte
- 12a, 12b, 12c, 12d: oberer Abstandshalter
- 13a, 13b, 13c, 13d: unterer Abstandshalter

## Patentansprüche

1. Sitzbezug mit einem mehrere Schichten (4, 5, 6) aufweisenden Verbund, wobei der Sitzbezug (1) mittels des Verbundes dreidimensional vorgeformt ist und wobei die Schichten (4, 5, 6) des Verbundes zumindest eine auf der Sichtseite des Sitzbezuges (1) angeordnete Dekorschicht (4) umfassen,
**dadurch gekennzeichnet,**
**dass** die Schichten (4, 5, 6) des Verbundes ein Abstandstextil (5) umfassen, welches auf seiner der Sichtseite des Sitzbezuges (1) zugeordneten Seite mit der Dekorschicht (4) verbunden ist,
**dass** die Schichten (4, 5, 6) des Verbundes eine textile Stützschicht (6), insbesondere aus Vlies, umfassen, die auf der Abseite des Sitzbezuges (1) angeordnet ist, und
**dass** das Abstandstextil (5) auf seiner der Abseite des Sitzbezuges (1) zugeordneten Seite mittels Fasern, die an wenigstens einer Oberfläche wenigstens einer der der beiden Schichten von Abstandstextil (5) und Stützschicht (6) angeordnet sind und beim Herstellen des Verbundes erhitzt wurden, mit der Stützschicht (6) verbunden ist.

2. Sitzbezug nach Anspruch 1, **dadurch gekennzeichnet, dass** das Abstandstextil (5) ein Abstandsgestrick oder ein Abstandsgewirke oder ein Abstandsgewebe ist.

3. Sitzbezug nach Anspruch 1 oder 2, **dadurch gekennzeichnet, dass** der Verbund wenigstens ein nach Erhitzen ausgehärtetes Verbindungsmaterial (7) zum Zusammenhalten von wenigstens zwei der Schichten (4, 5, 6) des Verbundes aufweist.

4. Sitzbezug nach Anspruch 3, **dadurch gekennzeichnet, dass** das Verbindungsmaterial (7), insbesondere netzförmig, zwischen wenigstens zwei der mittels des Verbindungsmaterials (7) zusammengehaltenen Schichten (4, 5, 6) des Abstandstextils (5) angeordnet ist.

5. Sitzbezug nach einem der Ansprüche 1 bis 4, **dadurch gekennzeichnet, dass** die Dekorschicht (4) perforiert ist.

6. Fahrzeugsitz mit einem Sitzbezug (1) und einem Polster, welches mit dem Sitzbezug (1) bespannt ist,
**dadurch gekennzeichnet,**
**dass** der Sitzbezug (1) nach einem der Ansprüche 1 bis 5 ausgebildet ist.

7. Verfahren zum Herstellen eines Sitzbezuges (1) mit einer auf der Sichtseite des Sitzbezuges (1) angeordneten Dekorschicht (4), wobei ein Verbund mit mehreren Schichten (4, 5, 6), welche zumindest die Dekorschicht (4) umfassen, hergestellt und der Sitzbezug (1) mittels des Verbundes dreidimensional vorgeformt wird,
**dadurch gekennzeichnet,**
**dass** die Schichten (4, 5, 6) des herzustellenden Verbundes ein Abstandstextil (5) umfassen, welches auf seiner der Sichtseite des herzustellenden Sitzbezuges (1) zugewandten Seite mit der Dekorschicht (4) verbunden wird, wobei der Verbund mit einer textilen Stützschicht (6), insbesondere aus Vlies, hergestellt wird, die auf der Abseite des Sitzbezuges (1) angeordnet wird, wobei Schichten (4, 5, 6) des herzustellenden Verbundes durch Erhitzen von Fasern von wenigstens einer Oberfläche wenigstens der beiden Schichten von Abstandstextil (5) und Stützschicht (6) miteinander verbunden werden und wobei mittels diesen Fasern das Abstandstextil (5) auf seiner der Abseite des Sitzbezuges (1) zugeordneten Seite mit der Stützschicht (6) verbunden wird.

8. Verfahren nach Anspruch 7, **dadurch gekennzeichnet, dass** die Schichten (4, 5, 6) des Verbundes zwischen Formteilen (2, 3) angeordnet und darin zu dem Verbund verbunden werden.

9. Verfahren nach Anspruch 7 oder 8, **dadurch gekennzeichnet, dass** der Verbund mittels Erhitzen und Aushärten wenigstens eines zwischen zwei der Schichten (4, 5, 6) angeordneten Verbindungsmaterials (7) hergestellt wird, um nachfolgend mittels des ausgehärteten Verbindungsmaterials (7) diese Schichten (4, 5, 6) des Verbundes zusammenzuhalten.

10. Verfahren nach Anspruch 9, **dadurch gekennzeichnet, dass** das Verbindungsmaterial (7) vor dem Erhitzen, insbesondere netzförmig, zwischen wenigstens zwei der mittels des Verbindungsmaterials (7) zusammenzuhaltenden Schichten (4, 5, 6) des herzustellenden Verbundes angeordnet wird.

11. Verfahren nach Anspruch 9 oder 10, **dadurch gekennzeichnet, dass** mittels eines Hochfrequenzfeldes das Erhitzen zum Verbinden der Schichten (4, 5, 6) des herzustellenden Verbundes erfolgt.

12. Verfahren nach einem der Ansprüche 7 bis 11, **dadurch gekennzeichnet, dass** die Schichten (4, 5, 6) des Verbundes mittels Kantenschweißen in Verbindung mit lokalen Verprägungen in der Fläche zwischen den Kanten des Sitzbezuges (1) verbunden werden.

13. Verfahren nach einem der Ansprüche 7 bis 12, **dadurch gekennzeichnet, dass** die Dekorschicht (4) vor dem Verbinden der Schichten (4, 5, 6) perforiert wird.

14. Verfahren zum Herstellen eines Fahrzeugsitzes, bei dem ein Polster mit einem Sitzbezug (1) bespannt wird,
**dadurch gekennzeichnet,**
**dass** der Sitzbezug (1) zuvor mittels eines Verfahrens nach einem der Ansprüche 7 bis 13 hergestellt wird.

## Claims

1. Seat cover with a composite structure having a plurality of layers (4, 5, 6), wherein the seat cover (1) is preformed three-dimensionally by means of the composite structure, and wherein the layers (4, 5, 6) of the composite structure comprise at least one decorative layer (4) arranged on the visible side of the seat cover (1),
**characterized in that**
the layers (4, 5, 6) of the composite structure comprise a spacer fabric (5) of which the side attached to the visible side of the seat cover (1) is connected to the decorative layer (4),
the layers (4, 5, 6) of the composite structure comprise a textile support layer (6), in particular made of a nonwoven, which is arranged on the reverse side of the seat cover (1), and
the side of the spacer fabric (5) attached to the reverse side of the seat cover (1) is connected to the support layer (6) by means of fibres which are arranged on at least one surface of at least one of the two layers of spacer fabric (5) and support layer (6), and were heated during preparation of the composite structure.

2. Seat cover according to Claim 1, **characterized in that** the spacer fabric (5) is a knitted spacer fabric or a warp-knitted spacer fabric or a weft-knitted spacer fabric.

3. Seat cover according to Claim 1 or 2, **characterized in that** the composite structure includes at least one connecting material (7) that is cured after heating for holding together at least two of the layers (4, 5, 6) of the composite structure.

4. Seat cover according to Claim 3, **characterized in that** the connecting material (7) is arranged particularly in mesh-like manner between at least two of the layers (4, 5, 6) of the spacer fabric (5) which are held together by means of the connecting material (7).

5. Seat cover according to any one of Claims 1 to 4, **characterized in that** the decorative layer (4) is perforated.

6. Vehicle seat with a seat cover (1) and a cushion which is covered with the seat cover (1),
**characterized in that**
the seat cover (1) is constructed according to any one of Claims 1 to 5.

7. Method for preparing a seat cover (1) having a decorative layer (4) arranged on the visible side of the seat cover (1), wherein a composite structure is prepared having a plurality of layers (4, 5, 6) which comprise at least the decorative layer (4), and the seat cover (1) is preformed three-dimensionally by means of the composite structure,
**characterized in that**
the layers (4, 5, 6) of the composite structure to be prepared comprise a spacer fabric (5) of which the side attached to the visible side of the seat cover (1) to be prepared is connected to the decorative layer (4), wherein the composite structure is prepared with a textile support layer (6), made particularly from a nonwoven, which is arranged on the reverse side of the seat cover (1), wherein layers (4, 5, 6) of the composite structure to be prepared are connected to each other by heating of fibres of at least one surface of at least the two layers of spacer fabric (5) and support layer (6), and wherein the side of the spacer fabric (5) attached to the reverse side of the seat cover (1) is connected to the support layer (6) by means of said fibres.

8. Method according to Claim 7, **characterized in that** the layers (4, 5, 6) of the composite structure are arranged between moulded parts (2, 3) and are connected to the composite structure therein.

9. Method according to Claim 7 or 8, **characterized in that** the composite structure is prepared by heating and curing at least one connecting material (7) arranged between two of the layers (4, 5, 6), in order to subsequently hold said layers (4, 5, 6) of the composite structure together by means of the cured connecting material (7).

10. Method according to Claim 9, **characterized in that** prior to heating, the connecting material (7) is arranged particularly in mesh-like manner between at least two of the layers (4, 5, 6), which layers of the composite structure for preparation are to be held together by means of the connecting material (7).

11. Method according to either of Claims 9 or 10,
**characterized in that** the heating for connecting the layers (4, 5, 6) of the composite structure to be prepared is carried out by means of a high-frequency field.

12. Method according to any one of Claims 7 to 11,
**characterized in that** the layers (4, 5, 6) of the composite structure are connected by means of edge welding in conjunction with local stamping processes in the area between the edges of the seat cover (1).

13. Method according to any one of Claims 7 to 12,
**characterized in that** the decorative layer (4) is perforated before the layers (4, 5, 6) are connected.

14. Method for preparing a vehicle seat, in which a cushion is covered with a seat cover (1),
**characterized in that**
the seat cover (1) is previously prepared by means of a method according to any one of Claims 7 to 13.

## Revendications

1. Housse de siège comportant un composite présentant plusieurs couches (4,5,6), dans lequel la housse de siège (1) est préfaçonnée en trois dimensions au moyen du composite et dans lequel les couches (4,5,6) du composite comprennent au moins une couche décorative (4) disposée sur la face visible de la housse de siège (1), **caractérisé en ce que** les couches (4,5,6) du composite comprennent un textile d'espacement (5), qui est relié avec la couche décorative (4) sur son côté tourné vers la face visible de la housse de siège (1), **en ce que** les couches (4,5,6) du composite comprennent une couche de protection textile (6), notamment constituée d'un matériau non-tissé, qui est disposée sur la doublure de la housse de siège (1) et **en ce que** le textile d'espacement (5) est relié avec la couche de protection (6) sur son côté tourné vers la doublure de la housse de siège (1) au moyen de fibres, qui sont disposées sur au moins une surface d'au moins une des deux couches du textile d'espacement (5) et de la couche de protection (6) et ont été chauffées lors de la fabrication du composite.

2. Housse de siège selon la revendication 1, caractérisée ce que le textile d'espacement (5) est un textile tricoté d'espacement ou un textile maillé d'espacement ou un textile tissé d'espacement.

3. Housse de siège selon la revendication 1 ou 2, caractérisée ce que le composite présente au moins un d'un matériau de liaison (7) durci après le chauffage afin de maintenir assemblées au moins deux des couches (4,5,6) du composite.

4. Housse de siège selon la revendication 3, caractérisée ce que le matériau de liaison (7) est disposée de manière notamment réticulée entre au moins deux couches (4,5,6) du textile d'espacement (5) maintenues assemblées au moyen du matériau de liaison (7).

5. Housse de siège selon une des revendications 1 à 4, **caractérisée en ce que** la couche décorative (4) est perforée.

6. Siège de véhicule comportant une housse de siège (1) et un rembourrage, qui est tendu d'une couche de siège (1), **caractérisé en ce que** la housse de siège (1) est réalisée selon une des revendications 1 à 5.

7. Procédé de fabrication d'une ou de siège (1) comportant une couche décorative (4) disposée sur la face visible de la housse de siège (1), dans lequel un composite comportant plusieurs couches (4,5,6), qui comprennent au moins la couche décorative (4), est fabriqué et la housse de siège (1) est préfaçonnée en trois dimensions au moyen du composite, **caractérisé en ce que** les couches (4,5,6) du composite à fabriquer comprennent un textile d'espacement (5), qui est relié sur son côté tourné vers la face visible de la housse de siège à fabriquer (1) avec la couche décorative (4), dans lequel le composite fabriqué avec une couche de protection textile (6), notamment un matériau non-tissé, qui est disposé sur la face visible de la housse de siège (1), dans lequel des couches (4,5,6) du composite fabriqué sont reliées les unes aux autres en chauffant des fibres d'au moins une surface d'au moins deux du textile d'espacement (5) et de la couche de protection (6) et dans lequel au moyen de ces fibres le textile d'espacement (5) est relié sur son côté tourné vers la face visible de la hausse de siège (1) avec la couche de protection (6).

8. Procédé selon la revendication 7, **caractérisé en ce que** les couches (4,5,6) du composite sont disposées entre des moulures (2,3) et y sont reliés en formant le composite.

9. Procédé selon la revendication 7 ou 8, **caractérisé en ce que** le composite est fabriqué au moyen du chauffage et du durcissement d'un matériau de liaison disposé entre deux des couches (4,5,6), et est ensuite maintenu assemblé au moyen du matériau de liaison durci de ces couches (4,5,6) du composite (7).

10. Procédé selon la revendication 9, **caractérisé en ce que** le matériau de liaison (7) est disposé avant le chauffage, notamment de manière réticulée entre au moins deux des couches (4,5,6) maintenues assemblées au moyen du matériau de liaison (7) du composite à fabriquer.

11. Procédé selon la revendication 9 ou 10, **caractérisé en ce que** le chauffage pour relier les couches (4,5,6) du composite à fabriquer a lieu au moyen d'un champ à haute fréquence.

12. Procédé selon une des revendications 7 à 11, **caractérisé en ce que** les couches (4,5,6) du composite sont reliés au moyen d'un soudage des arêtes en liaison avec des estampages locaux de la surface entre les arêtes de la housse de siège (1).

13. Procédé selon une des revendications 7 à 12, **caractérisé en ce que** la couche décorative (4) est perforée avant la liaison des couches (4,5,6).

14. Procédé de fabrication d'un siège de véhicule, dans lequel un rembourrage est tendu d'une housse de siège (1), **caractérisé en ce que** la housse de siège (1) est fabriquée au préalable au moyen d'un procédé selon une des revendications 7 à 13.
